# FASCICULE DE BREVET EUROPEEN

(11) **EP 0 634 979 B1**
(45) Date de publication et mention de la délivrance du brevet: **29.12.1997**
(21) Numéro de dépôt: 93908995.9
(22) Date de dépôt: 05.04.1993
(51) Int. Cl.: B60K 41/00, B60R 16/00, G05G 5/00

(54) **INSTALLATION DE COMMANDES DE VEHICULE AUTOMOBILE POUR L'ASSISTANCE A LA CONDUITE DE PERSONNES HANDICAPEES**
FAHRZEUGSTEUERVORRICHTUNG FÜR BEHINDERTE FAHRER
SET OF MOTOR VEHICLE CONTROLS FOR THE ASSISTANCE OF INVALID DRIVERS

(30) Priorité: 07.04.1992 FR 9204333; 02.04.1993 FR 9304086
(43) Date de publication de la demande: 25.01.1995
(73) Titulaire: RIVAS, Francisco, 31150 Bruguières (FR); SANTA-LUCIA, Michel, F-31490 Brax (FR)
(72) Inventeur: RIVAS, Francisco, 31150 Bruguières (FR); SANTA-LUCIA, Michel, F-31490 Brax (FR)
(74) Mandataire: Ravina, Bernard
(86) Numéro de dépôt international: FR9300342
(87) Numéro de publication internationale: WO9319948

(56) Documents cités:
- WO-A-91/05456
- DE-A- 2 720 433
- FR-A- 2 455 531
- FR-A- 2 667 277
- SE-B- 465 868
- US-A- 2 828 645
- US-A- 3 916 722
- US-A- 4 078 628
- US-A- 4 648 005
- US-A- 4 924 960
- US-A- 5 086 870

## Description

La présente invention a pour objet une installation de commande de véhicule automobile pour l'assistance à la conduite des dits véhicules.

Le brevet US 4 294 960 comprend :
- un premier ensemble de commande pour l'accélérateur et les freins,
- un ensemble de moteurs, chacun commandant respectivement une des pédales du pédalier,
- au moins un organe de transmission sans fil ou filaire des ordres donnés par le premier ensemble de commande,
- au moins un organe de réception des dits ordres couplés à une unité électronique d'asservissement des moteurs,
- des organes de transmission depuis chacun des moteurs à la pédale correspondante de freins et d'accélérateur.

Cependant, ce brevet US 4 924 960 présente un certain nombre d'inconvénients.
Le premier est que le premier ensemble de commande est un manipulateur à deux axes.
Ce système qui n'est pas autorisé par la législation en vigueur présente l' inconvénient d'une part, de ne pas permettre par l'utilisateur l'usage normal du volant qui est le mouvement naturel dans la conduite des véhicules et d'autre part, de nécessiter chez l'utilisateur un apprentissage long de l'usage du manipulateur.

En outre, la mise en place de ce dispositif notamment en ce qu'il intervient sur la colonne de direction rend la transformation du véhicule irréversible et doit être réalisée en usine.
La plupart des installations connues sont conçues pour être adaptées sur des véhicules dotés d'une boite de vitesse automatique, ce qui augmente sensiblement le coût du véhicule équipé et restreint le choix du modèle et même de la marque.

C'est ainsi que le brevet Us 4 294 960 décrit une installation comportant une commande à partir d'un levier monté sur deux axes qui, par une transmission, commande des moteurs agissant sur les pédales de freins et d'accélérateur et sur la direction.

Le but de l'invention est de réaliser une installation qui soit adaptable de manière simple sur des véhicules de série à boite de vitesse mécanique et pédalier sans modification des éléments constructeurs.

Un autre but de l'invention est de réaliser une installation qui soit modulaire et puisse donc équiper aussi bien des véhicules à boite de vitesse mécanique que des véhicules à boite de vitesse automatique.

Un autre but de l'invention est de réaliser une installation qui permette à l'utilisateur d'éprouver des sensations identiques à celles de la conduite d'un véhicule normal.

L'invention vise également à réaliser une installation qui permette de conserver toute la souplesse et les performances du véhicule et qui offre la possibilité d'une conduite normale par une personne utilisant le pédalier ou d'une conduite sans pédalier, ce qui rend le véhicule ainsi équipé universel.

A cet effet l'installation selon l'invention comprend :
- une pluralité d'organes de commande par lesquels sont donnés des ordres de commande et comprenant un premier ensemble de commandes pour l'accélérateur et le frein,
- un ensemble de moteurs, chacun commandant respectivement une des pédales du pédalier ou tout autre élément permettant la commande,
- au moins un organe de transmission sans fil ou filaire des ordres donnés par le premier ensemble de commande,
- au moins un organe de réception des dits ordres de commande couplé à une unité électronique d'asservissement des moteurs et
- des organes de transmission depuis chacun des moteurs à la pédale correspondante de frein et d'accélérateur, ladite installation étant caractérisée en ce que :
- le premier ensemble de commandes est situé sur le volant directionnel,
- ladite pluralité d'organes de commande comprend un deuxième ensemble de commandes, indépendant du volant, pour l'embrayage et les freins,
- ladite installation comprend une transmission filaire ou sans fil des ordres donnés par le deuxième ensemble de commandes indépendant du volant,
- ledit ensemble de moteurs comprend un moteur commandant la pédale d'embrayage et relié à ladite pédale d'embrayage par un organe de transmission.

Les organes de transmission des ordres peuvent être filaires ou non filaires de tout type connu.

Suivant encore une autre disposition de l'invention, l'ensemble des moteurs de celle-ci comprend autant de moteurs que de pédales au pédalier, ou d'éléments à actionner.

Suivant encore une autre caractéristique de l'invention, le deuxième ensemble de commandes est monté sur le pommeau du levier de changement de vitesse et comprend une gachette de commande de l'embrayage et un bouton de commande du frein, les dits gachettes et bouton étant reliés au boitier d'asservissement électronique des moteurs par tous moyens filaires ou sans fil.

Suivant une autre caractéristique de l'invention, l'ensemble de commandes sur le volant pour l'accélérateur et le frein est constitué :
- d'au moins un capteur de position monté sur le volant pour commander l'accélérateur,
- d'au moins un capteur de position monté sur le volant pour commander le frein,
- d'au moins un organe radio-émetteur qui reçoit les ordres des capteurs et d'au moins un organe radio-récepteur en liaison avec le circuit électronique d'asservissement qui transmet les ordres au moteur concerné.

Suivant une autre caractéristique de l'invention, le volant est doté d'un cerceau interne tournant portant deux capteurs annulaires concentriques dont un pour l'accélérateur et un pour le frein. Cette rotation du cerceau par rapport au volant et inversement permet une manoeuvre du volant par le conducteur qui garde le contact avec les capteurs.

D'autres caractéristiques et avantages de l'invention apparaitront à la lecture de la description ci-après d'une forme de réalisation de l'invention donnée à titre d'exemple non limitatif et illustrée par des dessins joints en lesquels :
- la figure 1 est une représentation schématique de l'installation selon l'invention,
- la figure 2 est une vue de l'ensemble de commandes au volant,
- les figures 3-4-5 sont des vues selon les coupes AA-BB et CC de la figure 2,
- la figure 6 est une vue en coupe du pommeau du levier de commande du changement de vitesse avc commande du frein et de l'embrayage,
- la figure 7 est une autre vue en coupe du pommeau selon la figure 6,
- la figure 8 est une vue de dessus du volant selon une nouvelle forme de réalisation de l'invention,
- les figures 9 et 10 sont des vues partielles du volant selon la figure 8,
- les figures 11, 12, 13 et 14 représentent un dispositif de protection de pédalier,
- la figure 15 représente vue en coupe une forme de réalisation des commandes au pommeau du levier de changement de vitesse.

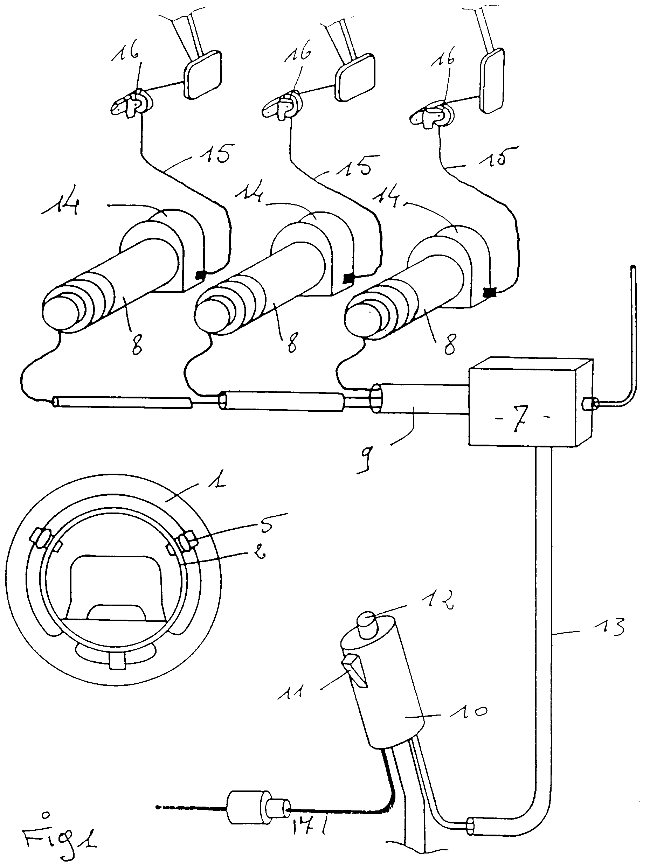

Telle que représentée à la figure 1, l'installation selon l'invention comprend sur le volant directionnel 1 un premier ensemble de commandes pour l'accélérateur et le frein.

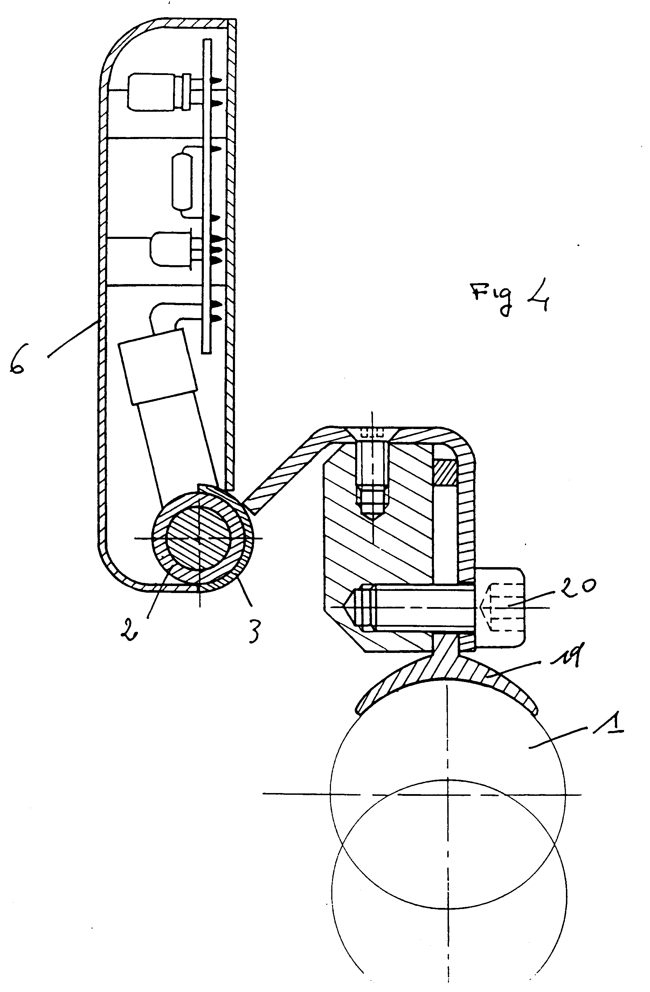

La commande d'accélérateur 2 est constituée par un cerceau 3 (Fig.3) de plus petit diamètre que le volant et qui se monte à l'intérieur de celui-ci.

Sur le cerceau 3 est monté un boyau souple 4 relié à un capteur de pression.

La commande de frein est constituée de deux boutons poussoirs 5 qui actionnent des capteurs proportionnels de pression d'effort ou de course.

Les boutons poussoirs sont disposés sur la partie supérieure du volant par rapport à son diamètre horizontal et de part et d'autre de son diamètre vertical.

Les informations des capteurs du boyau pour l'accélérateur et des boutons poussoirs pour le frein sont transmises à un organe émetteur 6 porté par le cerceau 3 et à l'intérieur de celui-ci.

Les capteurs utilises sont de type inductif dont les impulsions émises sont fonction du degré d'enfoncement de la commande comme il sera décrit plus loin.

Ces impulsions sont transmises par l'organe émetteur sans fil du volant à l'organe récepteur d'un boitier 7 d'asservissement électrique.

Il va de soi que sans sortir du cadre de l'invention, la transmission des ordres ou impulsions peut se faire par des moyens sans fil, émetteurs ou télétransmetteurs de tout type connu ou par des moyens filaires.

Le boitier d'asservissement 7 est relié à la bobine d'allumage ou a tout autre source donnant l'information régime moteur. Ce boitier est relié à chacun des moteurs 8 par un système filaire 9.

Sur le pommeau 10 du levier du changement de vitesse sont montées une commande d'embrayage constituée par une gachette 11 actionnant un capteur proportionnel de pression d'effort ou de course non représenté et une commande de frein 12 constituée d'un bouton actionnant également un capteur de pression non représenté.

Les ordres et signaux des commandes 11-12 des capteurs correspondants sont transmis au boitier d'asservissement électronique par un système filaire 13 ou non filaire comme énoncé plus haut.

Chacun des moteurs 8 comprend un moteur électrique asservi en position, un réducteur à engrenage et un treuil 14.

Chacun des treuils 14 actionne un cable 15 sous gaine qui est relié par une poulie de renvoi 16 à la pédale 17 correspondante dont il va déterminer l'enfoncement. On entend par moteur tout système moteur de type connu, électrique, pneumatique ou hydraulique par exemple qui peut actionner des organes de transmission des ordres reçus aux pédales.

Le boitier électronique 7 est utilisé pour transformer l'information des différents capteurs, du volant ou du pommeau de levier de vitesse, en puissance électrique modulée permettant aux moteurs d'atteindre la position désirée avec maintien en position.

Ce système d'asservissement fonctionne en boucle fermée : chaque moteur est doté d'un capteur de position qui renvoie au boitier une information relative à sa position cela permet d'éviter des erreurs de position et permet d'obtenir une précision optimale de position de chacune des pédales 16.

Le boitier d'asservissement électronique a une fonction de gestion des priorités de commande.

Le groupe moteur obéit au capteur le plus enfoncé. Dans le cadre de l'embrayage, il obéit au régime moteur lorsque celui-ci est inférieur à une valeur donnée.

Cela permet d'une part une discrimination entre les capteurs et d'autre part une plus grande sécurité.

Tous les paramètres, tels que position repos, course maximum et régime moteur, sont réglables à partir du boitier afin d'être adaptables à n'importe quel type de pédalier.

Le boitier d'asservissement électronique peut être logé dans le compartiment moteur du véhicule ou tout emplacement désiré et l'ensemble des moteurs 8 peut être disposé en tous points de l'habitacle par exemple sous le siège ou sous le tableau de bord.

Chacun des capteurs de frein et d'embrayage du volant 5 ou du pommeau 10 du levier de changement de vitesse est équipé d'un dispositif permettant de faire varier la résistance à l'enfoncement.

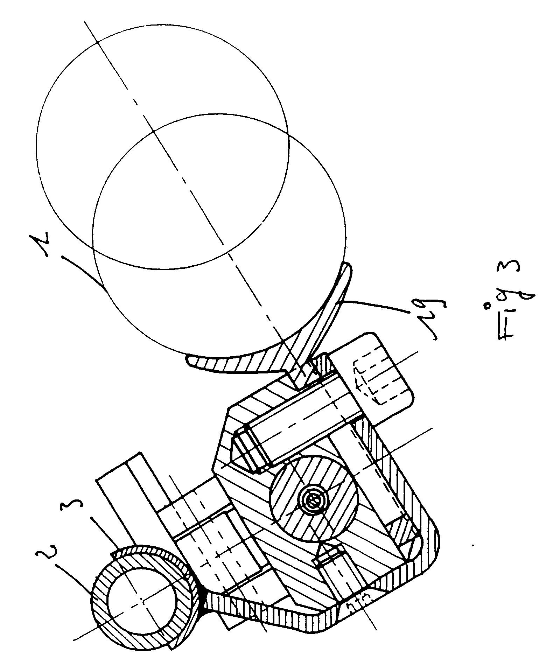

La commande 5 du frein sur le volant (figure 6) est dotée d'un ressort à double raideur qui permet au conducteur de sentir le freinage.

La commande de frein 12 sur le pommeau du levier de changement de vitesse (Figs. 1-6-7) est reliée par un conduit 17 avec réducteur de pression au maître cylindre qui génère une pression transmise à un micro-vérin 18 afin d'obtenir un durcissement de la commande proportionnel au freinage d'urgence par les commandes 5 du volant.

Le boitier 7 d'asservissement électronique actionne automatiquement l'embrayage dès que le moteur du véhicule atteint une vitesse de rotation inférieure à une valeur donnée, comprise par exemple entre 1 000 à 2 000 tours par minute, ce qui évite de caler le moteur en fin de freinage et permet de faire des manoeuvres dans le confort et la sécurité.

La gachette 11 d'embrayage est équipée (Fig.6) d'un double ressort permettant de matérialiser le point d'embrayage.

De ce fait, pour l'utilisateur, à l'enfoncement la gachette est souple jusqu'au début du débrayage ensuite la gachette est plus dure ; au relâchement, la gachette est d'abord facile à relacher, action du ressort dur puis devient moins facile, action du ressort mou ; c'est à ce moment là que l'embrayage s'engage et que l'utilisateur peut contrôler le patinage.

Un système de règlage par exemple à vis permet de déterminer le point de changement de la dureté d'enfoncement de la commande.

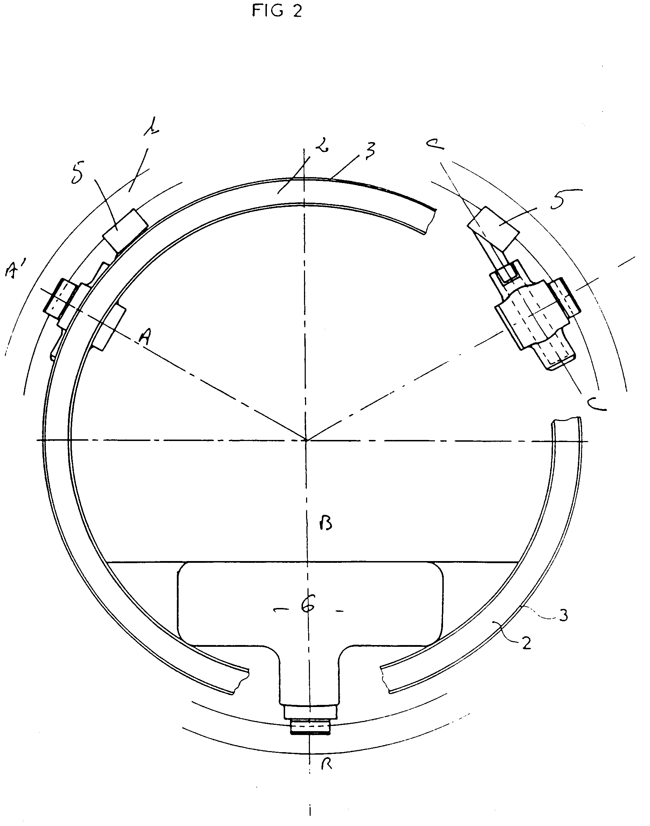

L'ensemble des commandes d'accélérateur et de frein est fixé au volant comme représenté aux figures 2-3-4 et 5.

Le cerceau 3 qui reçoit le boudin 2 de commande de l'accélérateur est doté de supports par exemple au nombre de trois disposés à 120° les uns par rapport aux autres.

Les dits supports comportent chacun une paroi en arc de courbe 19 qui s'appuie contre l'intérieur du volant et dont la position et le blocage sont réglables par une vis 20.

L'un des supports reçoit le boitier émetteur 6 et chacun des deux autres une commande 5 de freinage.

En figure 2 est représenté le cerceau 3 recevant les commandes de volant.

La figure 3 représente une vue selon la coupe AA de la figure 2.

La figure 4 représente une vue selon la coupe BB de la figure 2.

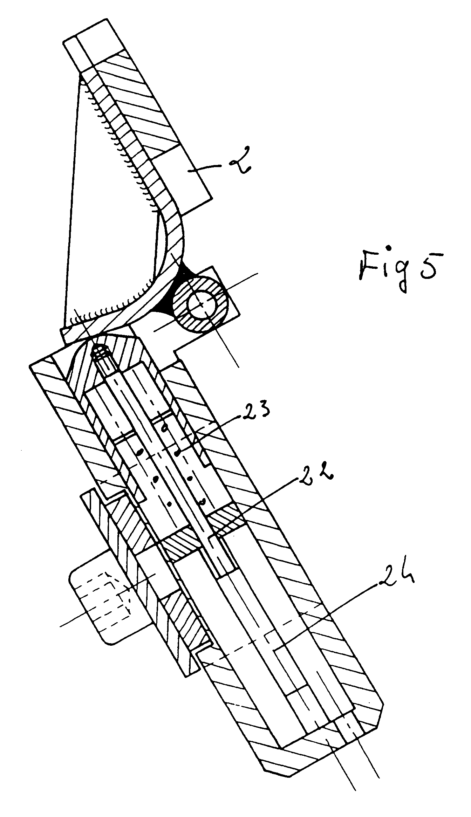

La figure 5 représente une vue selon la coupe CC de la figure 2.
Sur cette figure est représentée un poussoir 21 articulé qui commande un axe 22 monté sur un double ressort 23. A cet effet, deux ressorts concentriques l'un plus souple et l'autre plus dur sont montés sur l'axe 22.

Le ressort souple est actionné en premier puis ensuite le ressort dur.
L'axe 22 commande un capteur de pression 24 qui détermine une position du moteur 8 correspondant et donc de la pédale ou de l'élément commandé par le dit moteur.

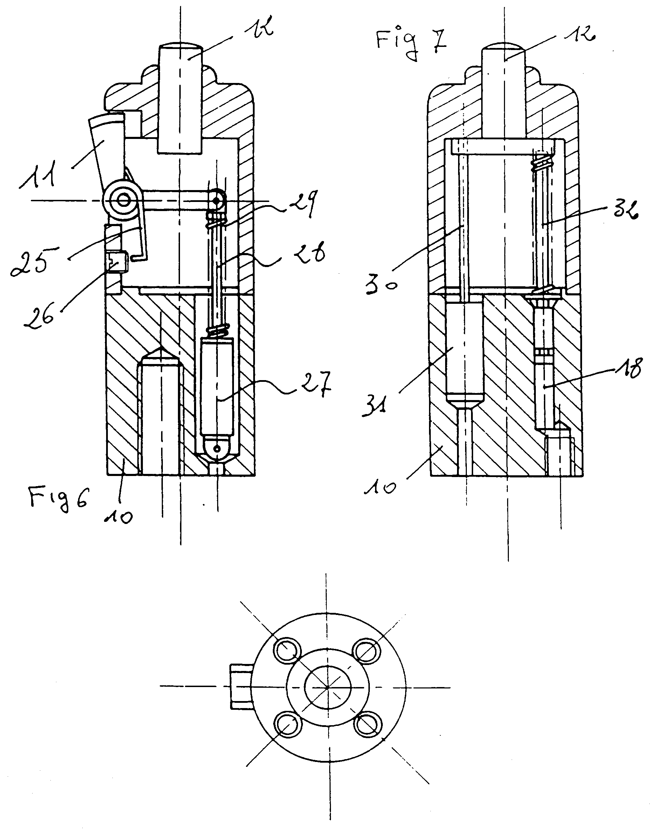

Les figures 6 et 7 sont des vues en coupe du pommeau 10 qui reçoit les commandes de débrayage et de frein. Ce pommeau peut être fixé sur le levier du changement de vitesse ou en tout autre emplacement de l'habitacle accessible au conducteur.

Pour des raisons de sécurité, il est prévu que la liaison entre les commandes 11 (embrayage et son capteur) et 12 (frein et son capteur) se fasse par fil ; on peut cependant concevoir qu'elle se fasse par un système émetteur-récepteur.

En figure 6 est représentée la gachette 11 montée sur un ressort 25 dur dont le réglage peut être obtenu par la vis pointeau 26.
La gachette 11 commande à l'enfoncement le capteur 27 de pression par un axe 28 avec ressort 29 de compression moins dur que le ressort 25. Le système est conçu de sorte que le ressort 29 soit sollicité avant le ressort 25 plus dur.

En figure 7 est représenté le poussoir de frein 12 qui par un axe 30 actionne un capteur de pression 31. Un deuxième axe 32 avec ressort 33 actionne un vérin 18 qui reçoit un retour de pression du maître cylindre par le conduit 17.

Les capteurs de pression déterminent la position des moteurs 8 qui actionnent, soit les pédales, soit tout autre élément de commande du fonctionnement du véhicule comme par exemple la commande de carburateur.

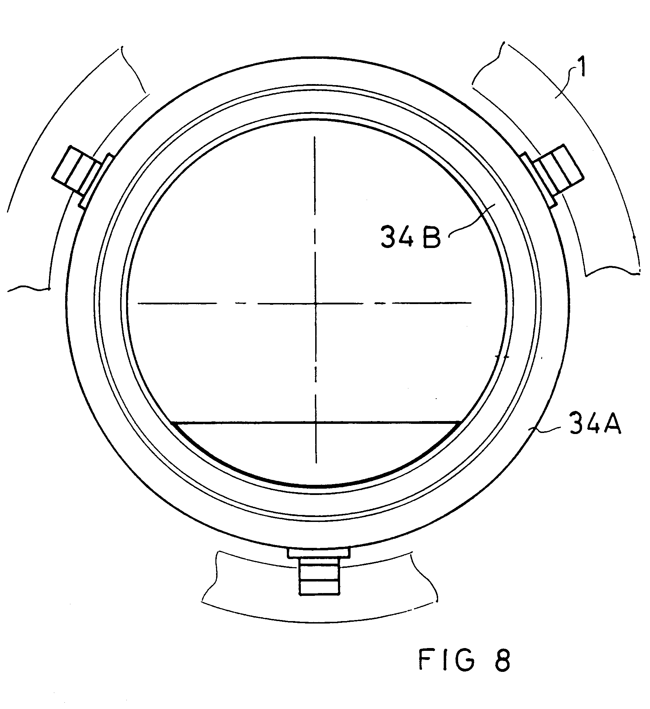

Suivant une forme de réalisation de l'invention représentée aux figures 8, 9 et 10, le volant 1 est doté d'un système de capteurs annulaires concentriques 34A et B qui ont un mouvement de rotation libre par rapport au volant 1, ce qui permet à l'utilisateur de garder le contact avec les capteurs tout en tournant le volant.

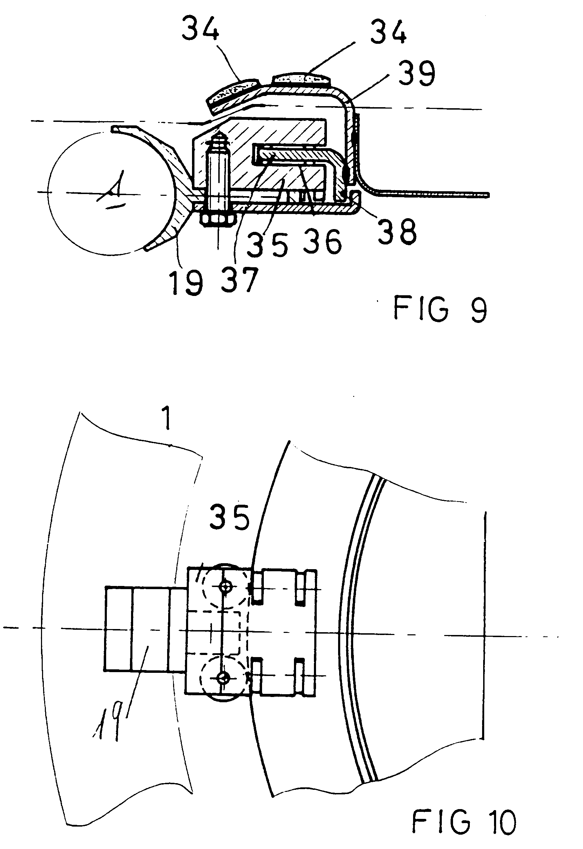

A cet effet, le montage des capteurs 34A et B, tel que représenté aux figures 9 et 10 est le suivant : Sur chaque support 19 fixé au volant est monté fixe un bloc 35 doté d'une rainure horizontale 36 dans laquelle coulisse la partie plane 37 d'un fer cornière circulaire.

Sur la partie verticale 38 du fer cornière circulaire est soudé le support 39 recouvrant le bloc 35 et recevant les capteurs 34A et 34B.

Le capteur intérieur 34A commande le frein et le capteur extérieur 34B commande l'accélérateur.
Le guidage en rotation du cerceau portant les capteurs étant assuré par les supports au volant, il est possible, soit d'installer autant de support désiré, soit de positionner les supports où l'on veut, par exemple pour éviter une branche du volant.

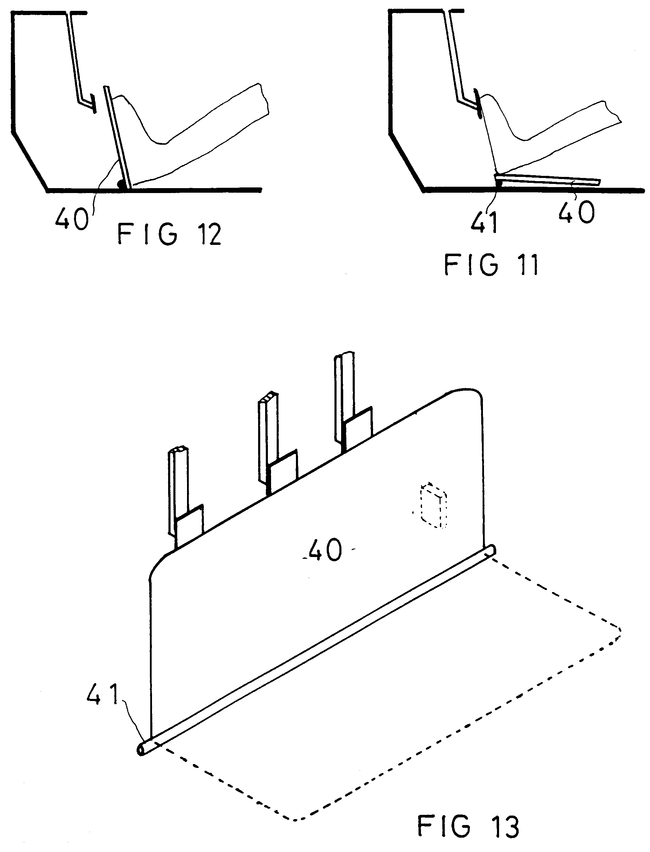

Suivant une autre disposition de l'invention représentée de manière schématique aux figures 11 à 14, l'installation selon l'invention est dotée d'une protection de pédalier.
Le but de cette disposition est d'éviter que les pieds du pilote handicapé ne passent sous les pédales et les bloquent en faisant obstacle à l'action des systèmes de commande, décrits plus haut, de ces pédales.

Le système de protection est conçu comme un obstacle fixe ou amovible et de préférence mobile qui se dispose devant le pédalier lors de la mise en fonctionnement de l'installation, c est à dire lorsque le véhicule doit être piloté par un handicapé sans recours direct au pédalier. Cet obstacle est schématiquement conçu comme une plaque rigide 40 de largeur adaptée ou adaptable articulée à sa base 41 au plancher du véhicule et susceptible d'être relevée manuellement ou de se relever automatiquement à la mise en marche de l'installation pour occuper une position verticale ou sensiblement verticale telle que représentée aux figures 12 et 13.

Il est prévu que l'installation ne puisse fonctionner que lorsque cette position d'obstacle de la plaque 40 est établie. Dans le cas de mise en place manuelle qui peut être effectuée par l'utilisateur ou un accompagnateur, un système de mise en butée qui peut être réglable et de verrouillage est adapté.

La mise en butée est alors détectée par l'installation qui autorise l'utilisation des commandes et/ou des moteurs.

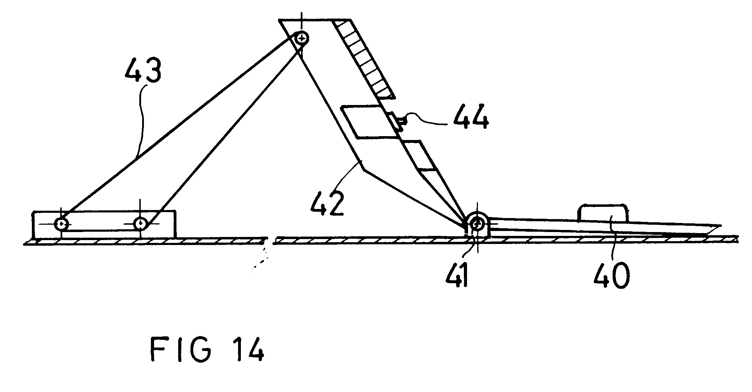

La figure 14 représente schématiquement un système de mise en butée.
Dans ce système, une butée 42 articulée en 41 est réglable en inclinaison par exemple par un cable de traction 43. La butée 42 est dotée sur sa face qui reçoit la plaque 40, d'un contact 44 enregistrant la mise en bute et transmettant l'information à l'installation.

La mise en place de l'obstacle 40 peut s'effectuer de manière automatique par exemple par un vérin ou une motorisation constitué d'un parallélépipède déformable, disposé
de préférence du côté droit. L'énergie nécessaire peut être électrique, électromagnétique, pneumatique ou hydraulique.

La mise en place de l'obstacle 40 est déclenchée par l'allumage de l'installation par exemple et comme dans la version manuelle, les moteurs des pédales ne seront activés qu'après validation de la mise en butée par le détecteur 44.
Une sécurité dans la version automatique peut détecter le blocage de la paroi 40 au sol, par les pieds par exemple, et déclenchera une alarme visuelle ou sonore.

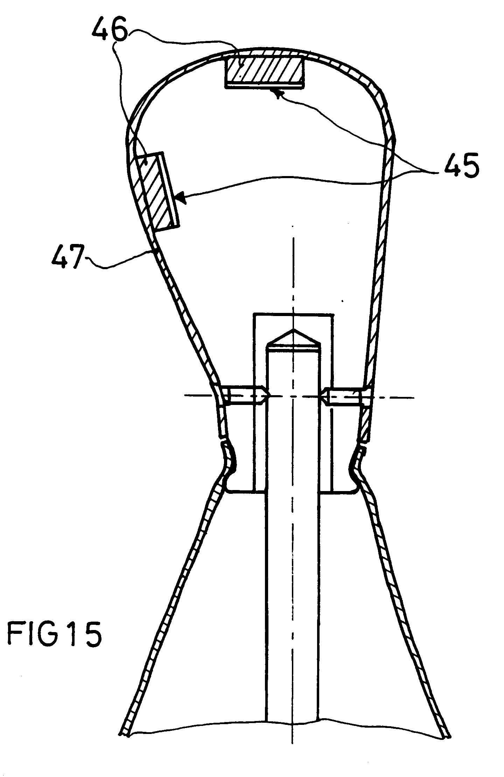

En figure 15 est représentée une variante de réalisation des commandes sur le pommeau du levier de changement de vitesse.
Le pommeau est doté de deux logements :
- un à son sommet,
- un sur le côté.

Au fond de chacun de ces logements est disposé un capteur 45 de pression ou autre du type tels qu'énoncés plus haut dans la description.
Un de ces capteurs 45 est un capteur de commande de frein, l'autre est un capteur de commande de l'embrayage.

Chacun des capteurs 45 est recouvert dans le logement correspondant par une cale 46 en matière synthétique dure par exemple du caoutchouc pour avoir une course mécanique.

L'ensemble du pommeau est recouvert par un revêtement 47 souple qui bloque les cales 46 en position.

## Revendications

1. Installation de commande de véhicule automobile pour l'assistance à la conduite de personnes handicapées des membres inférieurs comprenant :
- une pluralité d'organes de commande par lesquels sont donnés des ordres de commande et comprenant un premier ensemble de commandes pour l'accélérateur (2) et le frein (5),
- un ensemble de moteurs (8), chacun commandant respectivement une des pédales du pédalier ou tout autre élément permettant la commande,
- au moins un organe (6) de transmission sans fil ou filaire des ordres donnés par le premier ensemble de commande,
- au moins un organe de réception des dits ordres de commande couplé à une unité électronique (7) d'asservissement des moteurs et
- des organes (15) de transmission depuis chacun des moteurs à la pédale correspondante de frein et d'accélérateur,
caractérisée en ce que :
- le premier ensemble de commandes est situé sur le volant directionnel,
- ladite pluralité d'organes de commande comprend un deuxième ensemble de commandes, indépendant du volant, pour l'embrayage (11) et les freins (12),
- l'installation comprend une transmission filaire (13) ou sans fil des ordres donnés par le deuxième ensemble de commandes indépendant du volant,
- ledit ensemble de moteurs (8) comprend un moteur commandant la pédale d'embrayage et relié à ladite pédale d'embrayage par un organe de transmission.

2. Installation selon la revendication 1 caractérisée en ce que l'ensemble de commandes sur le volant pour l'accélérateur et le frein est constitué :
- d'au moins un capteur (2) monté sur le volant pour commander l'accélérateur,
- d'au moins un capteur pour commander le frein,
- d'au moins un organe radio-émetteur.

3. Installation selon la revendication 1 caractérisée en ce que le volant de direction (1) est doté d'un cerceau interne (39) tournant librement par rapport au volant, ledit cerceau portant deux capteurs annulaires concentriques (34A), (34B) dont un pour le frein et l'autre pour l'accélérateur.

4. Installation selon la revendication 1 caractérisée en ce que l'ensemble de moteurs comprend autant de moteurs (8) que de pédales au pédalier ou d'éléments à commander, et que chacun des moteurs (8) actionne un treuil (14) dont le cable (15) est relié à la pédale correspondante.

5. Installation selon la revendication 3 caractérisée en ce que chacun des moteurs est asservi en position par le boitier électronique (7).

6. Installation selon la revendication 1 caractérisée en ce que le deuxième ensemble de commandes pour le frein et l'embrayage est monté sur le pommeau (10) du levier de changement de vitesse, qu'il comprend un organe (11) de commande de l'embrayage et un organe (12) de commande de freins, ces organes de commande actionnant chacun un capteur, les dites commandes étant reliées par fil (13) au boitier (7) d'asservissement électronique des moteurs.

7. Installation selon la revendication 1 caractérisée en ce que la commande d'accélérateur du volant est montée sur un cerceau (3) interne du volant.

8. Installation selon la revendication 1 et l'une quelconque des revendications précédentes caractérisée en ce que la valeur d'actionnement des capteurs des commandes de volant conditionnne la valeur d'accélérateur ou de freinage.

9. installation selon la revendication 1 caractérisée en ce que les commandes (5) de frein sont dotées d'un système de restitution d'effort qui permet à l'utilisateur de sentir le point de freinage.

10. Installation selon la revendication 1 caractérisée en ce que la commande d'embrayage (11) est équipée d'un système de ressort à double raideur et/ou d'un système de double ressort qui permet de matérialiser le point d'embrayage.

11. Installation selon la revendication 1 caractérisée en ce que la commande (12) de freinage est dotée d'un système de durcissement à l'enfoncement relié par une conduite (17) au maître cylindre.

12. Installation selon la revendication 1 caractérisée en ce qu'elle est dotée d'une sécurité de pédalier.

13. Installation selon les revendications 1 et 12 caractérisée en ce que la sécurité de pédalier est constituée par un obstacle devant le pédalier, ledit obstacle étant amovible ou mobile.

14. Installation selon les revendications 12 et 13 caractérisée en ce que l'obstacle est constitué par une paroi (40) articulée en (41) sur le plancher et venant en position verticale ou sensiblement verticale, manuellement ou automatiquement, en position de butée (42).

15. Installation selon les revendications 12 et 14 caractérisée en ce que la mise en butée de la paroi (40) permet la mise en fonction de l'installation.

## Claims

1. Control installation for a motor vehicle to aid driving by persons with lower-limb disabilities, comprising:
- a plurality of control members by which control orders are given and comprising a first set of controls for the accelerator (2) and the brake (5),
- a set of motors (8), each controlling respectively one of the pedals on the pedal support or any other element allowing control,
- at least one wireless or wired member (6) for transmitting the orders given by the first control set,
- at least one member for receiving said control orders coupled to an electronic servo-control unit (7) for the motors and
- members (15) for transmission from each of the motors to the corresponding brake and accelerator pedal,
characterised in that:
- the first set of controls is located on the steering wheel,
- said plurality of control members comprises a second set of controls, independent of the steering wheel, for the clutch (11) and the brakes (12),
- the installation comprises a wired (13) or wireless transmission for the orders given by the second set of controls independent of the steering wheel,
- said set of motors (8) comprises a motor controlling the clutch pedal and connected to said clutch pedal by a transmission member.

2. Installation according to Claim 1 characterised in that the set of controls on the steering wheel for the accelerator and the brake is constituted by;
- at least one sensor (2) mounted on the steering wheel to control the accelerator,
- at least one sensor to control the brake,
- at least one radio-transmitter component.

3. Installation according to Claim 1 characterised in that the steering wheel (1) is provided with an inner hoop (39) rotating freely with respect to the steering wheel, said hoop carrying two concentric annular sensors (34A), (34B), one for the brake and the other for the accelerator.

4. Installation according to Claim 1 characterised in that the set of motors comprises the same number of motors (8) as there are pedals on the pedal support or elements to be controlled, and that each of the motors (8) actuates a winch (14), the cable (15) of which is connected to the corresponding pedal.

5. Installation according to Claim 3 characterised in that each of the motors is servo-controlled in terms of position by the electronic unit (7).

6. Installation according to Claim 1 characterised in that the second set of controls for the brake and the clutch is mounted on the knob (10) of the gear-change lever, that it comprises a clutch-control member (11) and a brake-control member (12), these control members each actuating a sensor, said controls being connected by wire (13) to the electronic servo-control unit (7) of the motors.

7. Installation according to Claim 1 characterised in that the accelerator control of the steering wheel is mounted on an inner hoop (3) of the steering wheel.

8. Installation according to Claim 1 and any one of the preceding claims characterised in that the actuation value of the sensors of the steering-wheel controls conditions the accelerator or braking value.

9. Installation according to Claim 1 characterised in that the brake controls (5) are provided with a system for restoring effort that allows the user to feel the braking point.

10. Installation according to Claim 1 characterised in that the clutch control (11) is equipped with a double-rigidity spring system and/or a double spring system that makes it possible to materialise the clutch point.

11. Installation according to Claim 1 characterised in that the braking control (12) is provided with a system of hardening on compression connected by a pipe (17) to the master cylinder.

12. Installation according to Claim 1 characterised in that it is provided with a safety device for the pedal support.

13. Installation according to Claims 1 and 12 characterised in that the pedal-support safety device is constituted by an obstacle in front of the pedal support, said obstacle being removable or movable.

14. Installation according to Claims 12 and 13 characterised in that the obstacle is constituted by a wall (40) hinged at (41) to the floor and coming into the vertical or substantially vertical position, manually or automatically, in the limit position (42).

15. Installation according to Claims 12 and 14 characterised in that putting the wall (40) into the limit position allows the installation to be put into operation.

## Patentansprüche

1. Steuervorrichtung für ein Kraftfahrzeug zur Lenkhilfe für an den unteren Gliedern Behinderte, die folgendes aufweist:
- mehrere Steuerorgane, von denen Steuerbefehle gegeben werden und die eine erste Einheit von Steuerungen für das Gaspedal (2) und die Bremse (5) aufweisen,
- eine Einheit von Motoren (8), von denen jeweils einer eines der Pedale der Pedalanordnung oder jedes andere, die Steuerung ermöglichende Element steuert,
- wenigstens ein Organ (6) zur drahtlosen oder drahtgebundenen Übertragung der von der ersten Steuereinheit gegebenen Befehle,
- wenigstens ein Organ zum Empfang der Steuerbefehle, das mit einer elektronischen Regeleinheit (7) für die Motoren gekoppelt ist, sowie
- Organe (15) zur Übertragung von jedem der Motoren zu dem entsprechenden Brems- und Gaspedal,
dadurch gekennzeichnet, daß
- die erste Einheit von Steuerungen am Lenkrad liegt,
- die mehreren Steuerorgane eine zweite, vom Lenkrad unabhängige Einheit von Steuerungen für die Kupplung (11) und die Bremsen (12) aufweisen;
- die Vorrichtung eine drahtgebundene (13) oder drahtlose Übertragung (13) der von der zweiten, vom Lenkrad unabhängigen Einheit von Steuerungen gegebenen Befehle aufweist,
- die Einheit von Motoren (8) einen Motor aufweist, der das Kupplungspedal steuert und durch ein Übertragungsorgan mit dem Kupplungspedal verbunden ist.

2. Vorrichtung nach Anspruch 1, dadurch gekennzeichnet, daß die Einheit von Steuerungen am Lenkrad für das Gaspedal und die Bremse aus folgendem gebildet ist:
- wenigstens einem Sensor (2), der zum Steuern des Gaspedals am Lenkrad angebracht ist,
- wenigstens einem Sensor zum Steuern der Bremse,
- wenigstens einem Funksendeorgan.

3. Vorrichtung nach Anspruch 1, dadurch gekennzeichnet, daß das Lenkrad (1) mit einem inneren Reif (39) versehen ist, der sich bezüglich des Lenkrades frei dreht, wobei der Reif zwei konzentrische ringförmige Sensoren (34A, 34B) trägt, einen für die Bremse und den anderen für das Gaspedal.

4. Vorrichtung nach Anspruch 1, dadurch gekennzeichnet, daß die Einheit von Motoren so viele Motoren (8) aufweist, wie Pedale an der Pedalanordnung oder Elemente zu steuern sind, und daß jeder der Motoren (8) eine Winde (14) betätigt, deren Kabel (15) mit dem entsprechenden Pedal verbunden ist.

5. Vorrichtung nach Anspruch 3, dadurch gekennzeichnet, daß jeder der Motoren von der Elektronikbox (7) positionsmäßig geregelt wird.

6. Vorrichtung nach Anspruch 1, dadurch gekennzeichnet, daß die zweite Einheit von Steuerungen für die Bremse und die Kupplung an der Manschette (10) des Gangschalthebels angebracht ist, daß sie ein Organ (11) zum Steuern der Kupplung und ein Organ (12) zum Steuern der Bremsen aufweist, wobei diese Steuerungen durch einen Draht (13) mit der elektronischen Regelbox (7) für die Motoren verbunden sind.

7. Vorrichtung nach Anspruch 1, dadurch gekennzeichnet, daß die Gaspedalsteuerung des Lenkrades an einem inneren Reif (3) des Lenkrades angebracht ist.

8. Vorrichtung nach Anspruch 1 und einem der vorhergehenden Ansprüche, dadurch gekennzeichnet, daß der Betätigungswert der Sensoren der Lenkradsteuerungen den Beschleunigungs- oder Bremswert bedingt.

9. Vorrichtung nach Anspruch 1, dadurch gekennzeichnet, daß die Bremssteuerungen (5) mit einem System zur Kraftwiedergabe versehen sind, das es dem Benutzer ermöglicht, den Bremspunkt zu spüren.

10. Vorrichtung nach Anspruch 1, dadurch gekennzeichnet, daß die Kupplungssteuerung (11) mit einem Federsystem mit doppelter Steifigkeit und/oder einem doppelten Federsystem versehen ist, das die Markierung des Kupplungspunkts ermöglicht.

11. Vorrichtung nach Anspruch 1, dadurch gekennzeichnet, daß die Bremssteuerung (12) mit einem System zum härteren Drücken versehen ist, das über eine Leitung (17) mit dem Hauptzylinder verbunden ist.

12. Vorrichtung nach Anspruch 1, dadurch gekennzeichnet, daß sie mit einer Sicherheitseinrichtung für die Pedalanordnung versehen ist.

13. Vorrichtung nach den Ansprüchen 1 und 12, dadurch gekennzeichnet, daß die Sicherheitseinrichtung für die Pedalanordnung durch ein Hindernis vor der Pedalanordnung gebildet ist, das abnehmbar oder beweglich ist.

14. Vorrichtung nach den Ansprüchen 12 und 13, dadurch gekennzeichnet, daß das Hindernis durch eine Wand (40) gebildet ist, die bei (41) an den Boden angelenkt ist und in vertikaler oder im wesentlichen vertikaler Position von Hand oder automatisch in Anschlagposition (42) gelangt.

15. Vorrichtung nach den Ansprüchen 12 und 14, dadurch gekennzeichnet, daß die Vorrichtung in Betrieb gesetzt werden kann, wenn die Wand (40) in Anschlag gelangt.
